# EUROPÄISCHE PATENTSCHRIFT

(11) **EP 3 198 665 B1**
(45) Veröffentlichungstag und Bekanntmachung des Hinweises auf die Patenterteilung: **17.04.2019**
(21) Anmeldenummer: 15771889.1
(22) Anmeldetag: 22.09.2015
(51) Int. Cl.: H01M 2/10, H01M 10/625, H01M 10/643, H01M 10/613, B60K 1/04, B60L 1/06, B60L 11/18

(54) **BATTERIEGEHÄUSE**
BATTERY HOUSING
BOÎTIER DE BATTERIE

(30) Priorität: 26.09.2014 DE 102014114021
(43) Veröffentlichungstag der Anmeldung: 02.08.2017
(73) Patentinhaber: Obrist Technologies GmbH, 6890 Lustenau (AT)
(72) Erfinder: OBRIST, Frank, A-6900 Bregenz (AT); GRAZ, Martin, A-6890 Lustenau (AT); ROTH, Joachim Georg, 89584 Ehingen (DE); GIESE, Peter, 91074 Herzogenaurach (DE)
(74) Vertreter: Kilchert, Jochen
(86) Internationale Anmeldenummer: PCT/EP2015/071631
(87) Internationale Veröffentlichungsnummer: WO 2016/046146

(56) Entgegenhaltungen:
- WO-A1-2012/014398
- DE-T2- 60 024 166
- DE-T2- 60 128 619
- JP-A- 2003 157 817
- US-A1- 2012 129 024

## Beschreibung

Die Erfindung betrifft ein Batteriegehäuse, insbesondere für einen Energiespeicher für einen Hybridantrieb. Außerdem betrifft die Erfindung ein Verfahren zur Herstellung eines Gehäuses für einen solchen Energiespeicher als Speicherbatterie z.B. für den Hybridantrieb für ein Kraftfahrzeug.

Speicherbatterien für Elektro- bzw. Hybridantriebe von Kraftfahrzeugen sind in der Regel aus innerhalb eines Gehäuses angeordneten Batterien zusammengesetzt. Diese Batterien sind vorzugsweise zu mehreren Lagen zusammengefasst und werden durch innerhalb des Gehäuses angeordnete Kühlelemente, die jeweils in wärmeleitendem Kontakt mit den Polen der Batterien stehen, temperiert. Am Gehäuse sind Fluidanschlüsse für den Zulauf und den Ablauf eines Kühlfluids zur Bildung eines Kühlkreislaufs vorgesehen. Außerdem sind am Gehäuse auch die elektrischen Anschlüsse zur Verbindung mit den Batteriezellen angeordnet.

Aus dem Stand der Technik ist ein solcher Gehäuseaufbau z.B. durch die EP 1 109 543 A1 bekannt geworden. Dieses Dokument offenbart ein doppelwandig aufgebautes metallisches Gehäuse aus Stahl in Form eines nach außen gasdicht abgeschlossenen Quaders. Der Raum zwischen den beiden Gehäusewandungen ist evakuiert und mit Isoliermaterial ausgefüllt. Im

Innenraum des Gehäuses sind Speicherzellen und zur Kühlung Wärmetauscher angeordnet, die bei Bedarf aus dem Gehäuse entnehmbar sein sollen. Dazu ist das quaderförmige Gehäuse an seinen Stirnflächen durch einen ebenfalls doppelwandig aufgebauten, abnehmbaren Stopfen verschlossen, in den auch die Kühlmedium-Leitungen für die Zuleitung und die Ableitung des Kühlmediums zu und von den Wärmetauschern integriert angeordnet sind.

Die DE 601 28 619 T2 offenbart ein Batteriegehäuse, insbesondere für einen Energiespeicher für einen Hybridantrieb, mit einem rohrförmigen Hauptkörper und wenigstens zwei Abschlussdeckeln, die in den Hauptkörper eingesetzt sind und jeweils eine Verschlussplatte aufweisen, die in Längsrichtung des Hauptkörpers nach innen versetzt angeordnet ist, wobei die Verschlussplatte Gehäusewände des Hauptkörpers stützt, wobei die Abschlussdeckel jeweils mit dem Hauptkörper verbunden sind und Fügestellen des Batteriegehäuses mit zusätzlichen Verbindungselementen ausgebildet sind.

Es ist Aufgabe der vorliegenden Erfindung, ein Gehäuse für eine solche Batterie so weiterzuentwickeln, dass sie betriebssicher ist und ggf. die Sicherheit in einem Crash-Fall (Vermeiden von Kurzschlussrisiken und evtl. in Folge entstehenden Bränden) weiter verbessert wird.

Mit der vorliegenden Erfindung wird diese Aufgabe durch die Merkmale des unabhängigen Anspruchs 1 gelöst. Besonders vorteilhaft ist es, wenn Hauptkörper und Verschlussdeckel jeweils aus einem Material mit identischen Materialeigenschaften, insbesondere aus einem Stahl oder einer Stahllegierung, hergestellt sind.

Das Gehäuse sollte höchstens vier, vorzugsweise aber höchstens drei, durchgängige, fluiddichte Schweißnähte aufweisen.

Besonders vorteilhaft ist es, den Hauptkörper aus zwei abgekanteten Blechen, die im Wesentlichen zu einem C-Profil geformt sind, aufzubauen, und diese Bleche an ihren Längsrändern durch Schweißen derart zu verbinden, dass ein im Wesentlichen rechteckig-quaderförmiges Rohrprofil gebildet wird.

Die Verschlussplatte zum Schließen der stirnseitigen Öffnungen im Hauptkörper kann sich im Wesentlichen senkrecht zur Längsachse des Hauptkörpers erstrecken und Öffnungen zur Einbringung der elektrischen Anschlüsse und/oder von Fluidanschlüssen aufweisen. Dabei kann der Verschlussdeckel jeweils einen geschlossen umlaufenden Randflansch aufweisen, der einteilig mit der Verschlussplatte ausgebildet ist und sich in Längsrichtung des Hauptkörpers in seiner in die Öffnungen im Hauptkörper eingesetzten Lage nach außen erstreckt und so mit dem Hauptkörper verschweißt ist. Vorzugsweise weist der Randflansch eine Außenkante auf, die mit einer stirnseitigen Endkante des Hauptkörpers bündig abschließt.

Die Befestigung des erfindungsgemäßen Gehäuses an einem Fahrzeug kann vorzugsweise dadurch erfolgen, dass wenigstens ein Befestigungsflansch außenseitig am Hauptkörper angeschweißt ist. Durch diese außenseitige Befestigungsflanschanordnung ist es möglich, individuelle Anordnungen weitgehend unabhängig von der Fahrzeuggeometrie am Fahrzeug vorsehen zu können. Ferner wird durch das Verschweißen des Hauptkörpers, der Verschlussdeckel und das Anschweißen eines oder mehrerer Befestigungsflansche am Gehäuse erreicht, dass keinerlei weitere Verbindungsmittel zwischen Gehäuseteilen notwendig werden. Damit werden die Stabilität des Aufbaus und die Sicherheit in einem evtl. Crash-Fall erheblich verbessert.

Vorzugsweise kann die Materialstärke bei Hauptkörper und Verschlussdeckel zwischen 2 mm und 5 mm, insbesondere zwischen 2,5 mm und 4 mm, insbesondere zwischen 2,8 mm und 3,5 mm, insbesondere 3 mm, betragen. Mit einem solchen Aufbau kann erreicht werden, dass das Batteriegehäuse zumindest in Längsrichtung des Hauptkörpers unter Einwirkung einer Aufprallkraft von mindestens einem 20-fachen, insbesondere mindestens einem 30-fachen, insbesondere mindestens einem 40-fachen, insbesondere mindestens einem 50-fachen der Erdanziehungskraft (g) formstabil ist.

Ein Energiespeicher in Form einer Batterie, insbesondere für einen Hybridantrieb eines Kraftfahrzeugs mit wenigstens einem Gehäuse nach der Erfindung kann mit wenigstens einem Kühlelement und wenigstens einem Zellenblock aus Batteriezellen, die aus Rundzellen ausgebildet sind, aufgebaut sein, wobei das Kühlelement und der Zellenblock innerhalb des Gehäuses angeordnet sind. Dabei kann das Kühlelement zwischen dem Zellenblock und dem Gehäuse angeordnet sein, wobei zwischen dem Kühlelement und dem Gehäuse ein Druckbeutel vorgesehen ist, der einen ausgehärteten Kunststoff aufweist und das Gehäuse zumindest abschnittsweise derart auswölbt, dass das Gehäuse über den Druckbeutel eine nach innen gerichtete Spannkraft auf das Kühlelement und den Zellenblock ausübt.

Die Erfindung betrifft ferner ein Kraftfahrzeug, insbesondere ein Hybridfahrzeug mit wenigstens einem Gehäuse für einen Energiespeicher und/oder wenigstens einer Batterie.

Bei einem derartigen Aufbau eines Gehäuses für einen Energiespeicher ist es von besonderem Vorteil, dass die elektrischen Anschlüsse und die Anschlüsse für das Kühlfluid völlig getrennt und in großem Abstand voneinander anordenbar sind, insbesondere dadurch, dass die elektrischen Anschlüsse in der Verschlussplatte des einen Verschlussdeckels an einer Stirnseite des Hauptkörpers angeordnet werden und die Anschlüsse für das Kühlfluid (Zu- und Abfuhr) in die Verschlussplatte des Verschlussdeckels an der gegenüberliegenden Stirnseite des Hauptkörpers eingebracht werden. Diese distanzierte Anordnung ist auch besonders vorteilhaft für die entsprechend sichere Führung der elektrischen Anschlüsse getrennt von der Führung des Kühlfluids im Inneren des Batteriegehäuses.

Ein Verfahren zur Herstellung eines Gehäuses für einen Energiespeicher bzw. eines Batteriesystems für ein Kraftfahrzeug, insbesondere ein Hybridfahrzeug, zeichnet sich durch folgende Schritte aus:
- Umkanten eines Stahlblechs zur Bildung eines C-Profils;
- Zusammensetzen zweier C-Profile zur Bildung eines im Wesentlichen quaderförmigen Hauptkörpers mit einem Vierkant-Hohlprofil;
- Verschweißen der Längskanten der beiden C-Profile;
- Anordnen zweier Verschlussdeckel in den stirnseitigen Öffnungen des Hauptkörpers, wobei die Verschlussdeckel mit in Längsrichtung des Hauptkörpers nach innen versetzten Verschlussplatten innerhalb des Vierkant-Hohlprofils angeordnet werden;
- Schweißverbinden der Verschlussdeckel mit dem Hauptkörper.

Der Gegenstand der Erfindung wird im Folgenden anhand von Ausführungsbeispielen unter Bezugnahme auf die beigefügten, schematischen Zeichnungen im Hinblick auf seine Merkmale und Einzelheiten näher erläutert.

Es zeigt:
- Fig. 1: eine perspektivische Ansicht eines Gehäuses bzw. einer Batterie nach der Erfindung. In dieser Darstellung ist eine Seitenwand des quaderförmigen Gehäuses weggelassen; und
- Fig. 2: eine perspektivische Anordnung eines Verschlussdeckels nach der Erfindung;

Die Fig. 3, 4 und 5 zeigen Möglichkeiten der Anordnung von Befestigungsflanschen durch Verschweißen am Hauptkörper des Gehäuses.

In den verschiedenen Figuren der Zeichnungen ist ein Batteriesystem 10 mit einem Gehäuse 11 dargestellt. Dieses Batteriesystem 10 ist insbesondere für ein Fahrzeug, z.B. ein Kraftfahrzeug mit einem Hybridantrieb geeignet. Unter Fahrzeug, insbesondere Kraftfahrzeug, sind dabei sowohl Fahrzeuge, die auf dem Land, in der Luft oder auch auf dem Wasser bewegt werden, zu verstehen.

Das Gehäuse 11 ist im Wesentlichen aus einem rohrförmigen Hauptkörper 12 aufgebaut, der im in den Zeichnungen dargestellten Ausführungsbeispiel eine im Wesentlichen rechteckig-quaderförmige Grundform aufweist. Diese quaderförmige Grundform kann vorzugsweise dadurch erreicht werden, dass zwei zu einem im Wesentlichen C-förmigen Profil abgekantete Stahlbleche zum quaderförmigen Hauptkörper 12 zusammengefügt und an ihren zusammenstoßenden Längskanten fluiddicht verschweißt sind.

Innerhalb des Gehäuses 11 sind eine Vielzahl von Batteriezellen 17 und Kühlelemente 18 angeordnet.

In die offenen Stirnseiten des rohrförmigen Hauptkörpers 12 sind jeweils Verschlussdeckel 19 bzw. 20 abstützend anliegend (formschlüssig) eingesetzt. Die Verschlussdeckel 19 bzw. 20 werden in dieser Position mit den Wandungen des rohrförmigen Hauptkörpers 12 verschweißt, wobei es zweckmäßig ist, wenn die Stirnkanten der umlaufenden Randflansche 21 jeweils bündig mit den stirnseitigen Endkanten des Hauptkörpers 12 abschließend anliegen. Damit ist in besonders einfacher Weise eine fluiddichte Verschweißung der eingesetzten Verschlussdeckel 19, 20 mit dem rohrförmigen Hauptkörper 12 erreichbar.

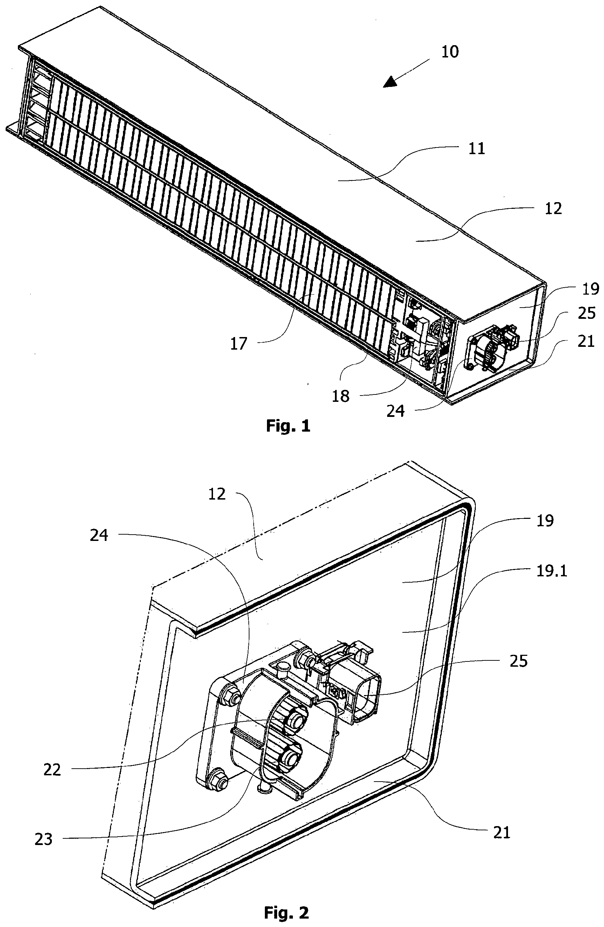

Im Verschlussdeckel 19 sind die elektrischen Anschlüsse für die Batteriezellen 17 angeordnet. Neben einer Strombuchse 22 kann z.B. eine Elektronikbuchse 23 (siehe Fig. 2) vorgesehen sein. Die Strombuchse 22 dient zum Abgreifen der innerhalb der Batteriezellen 17 gespeicherten elektrischen Energie bzw. zum Laden der Batteriezellen; die Elektronikbuchse 23 kann die Verbindung zu elektronischen Bauteilen im Inneren des Gehäuses 11 herstellen und z.B. zum Signal- und/oder Datenaustausch zwischen dem Batteriesystem 10 und der Fahrzeugelektronik, beispielsweise einem Bussystem, dienen. Sowohl die Strombuchse 22 als auch die Elektronikbuchse 23 und das diese tragende Bauteil 24 sind auf dem Verschlussdeckel 19 fluiddicht abdichtend festgelegt.

Im Verschlussdeckel 19 kann zusätzlich eine Öffnung bzw. ein Ventil 25 - vorzugsweise beabstandet zu den elektrischen Anschlüssen 22 bzw. 23 - angeordnet sein. Die Ventilöffnung im Verschlussdeckel 19 trägt zur besseren Wartung außenseitig ein Ventil, das z.B. mit einem Lufttrocknungsmittel bestückt sein kann. Dieses Lufttrocknungsmittel sollte unmittelbar auf der Ventilöffnung aufliegen, so dass die Wirkung im Inneren des Gehäuses 11 entfaltet wird und somit der Innenraum des Gehäuses 11 fortwährend von Feuchtigkeit befreit werden kann.

In der zweiten Stirnseite des rohrförmigen Hauptkörpers 12 bzw. des Gehäuses 11 ist in vergleichbarer Weise zum Einsetzen des Verschlussdeckels 19 der Verschlussdeckel 20 eingesetzt und dort fluiddicht verschweißt. Wie auch beim Verschlussdeckel 19 weist der Verschlussdeckel 20 in Längsrichtung des Hauptkörpers 12 nach innen versetzt - abgesetzt jeweils durch die umlaufenden Randflansche 21 - eine Verschlussplatte 19.1 bzw. 20.1 auf. Im Unterschied zum Verschlussdeckel 19 bzw. zur Verschlussplatte 19.1 sind in den Verschlussdeckel 20 bzw. in die Verschlussplatte 20.1 aber nicht die elektronischen bzw. elektrischen Anschlüsse eingebracht, sondern die Anschlüsse 26 für die Zu- bzw. Ableitung von Kühlfluid. Diese Anordnung der Fluidanschlüsse 26 völlig getrennt von den Elektroanschlüssen 22 bzw. 23 ist aus Sicherheitsgründen von besonderer Bedeutung.

Der insbesondere in Fig. 2 gezeigte Aufbau von Verschlussdeckel 19 mit seiner integrierten Verschlussplatte 19.1 und dem umlaufenden Randflansch 21 - der weitgehend identisch mit der konstruktiven Gestaltung des Verschlussdeckels 20 mit seiner Verschlussplatte 20.1 ist - bietet eine Reihe von Vorteilen: Zum einen wird durch die abstützend anliegende Konstruktion der Verschlussdeckel 19 bzw. 20 nicht nur eine erhöhte Stabilität des Gehäuses 11 erreicht, sondern auch an den Anschlussstellen eine besonders einfache Befestigung mit leicht erreichbarer Fluiddichtigkeit, einmal durch den Formschluss und zum Zweiten durch das randseitige Verschweißen. Außerdem wird aber vor allem dadurch erreicht, dass sowohl die Fluidanschlüsse 26 als auch die elektrischen Anschlüsse 22 und 23 sowie das Ventil 25 nach innen in Längsrichtung des rohrförmigen Hauptkörpers 12 versetzt in einem geschützten Raum angeordnet sind.

Zur Crash-Sicherheit und zur Dauerhaftigkeit ist es besonders vorteilhaft, alle Bauteile des Gehäuses 11 - Hauptkörper 12 mit den C-Profilen, Verschlussdeckel 19 bzw. 20 sowie auch die Bauteile zur Befestigung der Elektroanschlüsse, Ventile, Fluidanschlüsse - aus Material mit identischen Materialeigenschaften, insbesondere aber aus einem Stahl oder einer Stahllegierung herzustellen. Dabei hat sich eine Wandstärke von zwischen 2 mm und 5 mm für den Hauptkörper 12 und die Verschlussdeckel 19 bzw. 20 als besonders vorteilhaft erwiesen; ganz besonders vorteilhaft ist eine Wandstärke von ca. 3 mm.

Die Stabilität der Konstruktion und insbesondere die Crash-Sicherheit des Batteriesystems kann dadurch zusätzlich verbessert werden, dass Kühlelemente zwischen den aus Batteriezellen 17 gebildeten Zellenblöcken im Inneren des Gehäuses 11 und den Innenwandungen des rohrförmigen Hauptkörpers 12 und zwischen Kühlelement und Innenwandungen des Hauptkörpers 12 mindestens ein Druckbeutel angeordnet ist, der einen ausgehärteten Kunststoff aufweist und das den rohrförmigen Hauptkörper 12 zumindest abschnittsweise derart auswölbt bzw. verspannt, dass das Gehäuse über den Druckbeutel eine nach innen gerichtete Spannkraft auf Kühlelement und Zellenblock auszuüben in der Lage ist.

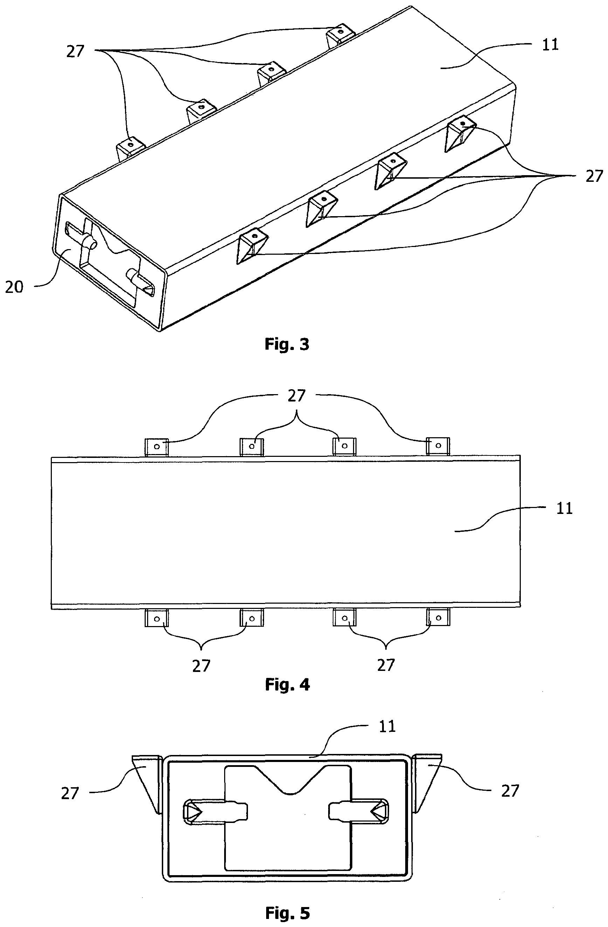

In den Fig. 3 - 5 ist eine mögliche Befestigungsform eines Batteriegehäuses in einem Kraftfahrzeug dargestellt. Dazu wird vorgeschlagen, an beliebigen Stellen des rohrförmigen Hauptkörpers 12 außenseitig eine Mehrzahl von Befestigungsflanschen 27 z.B. zum Verschrauben des Batteriesystems 10 mit dem Aufbau eines Fahrzeuges anzuschweißen. Durch die an beliebigen Stellen des Gehäuses 11 anzubringenden Befestigungsflansche 27 ist eine individuelle Anpassung der Befestigung an die Fahrzeuggeometrie leicht möglich. Anzahl und Positionierung der Befestigungsflansche 27 sind nahezu beliebig wählbar. Ein besonderer Vorteil dieser Befestigungsform über angeschweißte Befestigungsflansche 27 ist auch darin zu sehen, dass die Stabilität des Gehäuses 11 im Hinblick auf Crash-Sicherheit und insbesondere im Hinblick auf den Schutz der Funktionsbauteile im Inneren des Gehäuses 11 durch das außenseitige Anschweißen der Befestigungsflansche 27 in keiner Weise beeinträchtigt wird. Selbstverständlich sind Befestigungsflansche nicht nur, wie im gezeigten Beispiel nach den Fig. 3 - 5, auf den Schmalseiten des Gehäuses 11 denkbar, sondern vielmehr auch auf der Ober- oder der Unterseite - je nach den fahrzeugseitigen Anforderungen - möglich.

### Bezugszeichenliste

- 10: Batteriesystem
- 11: Gehäuse
- 12: Rohrförmiger Hauptkörper
- 17: Batteriezellen
- 18: Kühlelemente
- 19: Verschlussdeckel
- 19.1: Verschlussplatte
- 20: Verschlussdeckel
- 20.1: Verschlussplatte
- 21: Randflansch von 19 bzw. 20
- 22: Strombuchse
- 23: Elektronikbuchse
- 24: Bauteil
- 25: Ventil/Ventilöffnung
- 26: Fluidanschlüsse für Kühlfluid
- 27: Befestigungsflansch

## Patentansprüche

1. Batteriegehäuse (11), insbesondere für einen Energiespeicher für einen Hybridantrieb, mit einem rohrförmigen Hauptkörper (12) und wenigstens zwei Abschlussdeckeln (19, 20), die in den Hauptkörper (12) eingesetzt sind und jeweils eine Verschlussplatte (19.1, 20.1) aufweisen, die in Längsrichtung des Hauptkörpers (12) nach innen versetzt angeordnet ist, wobei die Verschlussplatte (19.1, 20.1) Gehäusewände des Hauptkörpers (12) stützt, dadurch gegenzeichnet, dass die Abschlussdeckel (19, 20) jeweils mit dem Hauptkörper (12) fluiddicht verschweißt und alle Fügestellen des Batteriegehäuses (11) ohne gesonderte Verbindungselemente ausgebildet sind.

2. Batteriegehäuse (11) nach Anspruch 1,
**dadurch gekennzeichnet, dass**
der Hauptkörper (12) und die Abschlussdeckel (19, 20) jeweils aus einem Material, insbesondere einem Stahl oder einer Stahllegierung, gebildet sind, das identische Materialeigenschaften aufweist.

3. Batteriegehäuse (11) nach Anspruch 1 oder 2,
**gekennzeichnet durch**
höchstens vier, insbesondere höchstens drei, durchgängige, fluiddichte Schweißnähte.

4. Batteriegehäuse (11) nach einem der vorhergehenden Ansprüche,
**dadurch gekennzeichnet, dass**
der Hauptkörper (12) aus zwei zu jeweils einem C-Profil abgekanteten Blechen geformt ist, die an Ihren Längsrändern schweißverbunden sind derart, dass ein im Wesentlichen rechteckiges Rohrprofil gebildet ist.

5. Batteriegehäuse (11) nach einem der vorhergehenden Ansprüche,
**dadurch gekennzeichnet, dass**
sich die Verschlussplatte (19.1, 20.1) im Wesentlichen senkrecht zu einer Längsachse des Hauptkörpers (12) erstreckt und Öffnungen zur Durchführung von elektrischen Anschlüssen und/oder Fluidanschlüssen (26) aufweist.

6. Batteriegehäuse (11) nach einem der vorhergehenden Ansprüche,
**dadurch gekennzeichnet, dass**
die Abschlussdeckel (19, 20) jeweils einen umlaufenden Randflansch (21) aufweisen, der einteilig mit der Verschlussplatte (19.1, 20.1) ausgebildet ist, sich in Längsrichtung des Hauptkörpers (12) nach außen erstreckt und mit dem Hauptkörper (12) verschweißt ist.

7. Batteriegehäuse (11) nach Anspruch 6,
**dadurch gekennzeichnet, dass**
der Randflansch (21) eine Außenkante aufweist, die mit einer stirnseitigen Endkante des Hauptkörpers (12) bündig abschließt.

8. Batteriegehäuse (11) nach einem der vorhergehenden Ansprüche,
**dadurch gekennzeichnet, dass**
am Hauptkörper (12) wenigstens ein Befestigungsflansch (27) angeschweißt ist, der zur Befestigung des Hauptkörpers (12) an einem Fahrzeug geeignet ist.

9. Batteriegehäuse (11) nach einem der vorhergehenden Ansprüche,
d**adurch gekennzeichnet**, dass
der Hauptkörper (12) und die Abschlussdeckel (19, 20) jeweils eine Wandstärke zwischen 2mm und 5mm, insbesondere zwischen 2,5mm und 4mm, insbesondere zwischen 2,8mm und 3,5mm, insbesondere von 3mm, aufweisen.

10. Batterie, insbesondere für einen Hybridantrieb, mit wenigstens einem Batteriegehäuse gemäß einem der vorhergehenden Ansprüche, wenigstens einem Kühlelement und wenigstens einem Zellenblock aus Batteriezellen (17), die als Rundzellen ausgebildet sind, wobei das Kühlelement und der Zellenblock innerhalb des Batteriegehäuses (11) angeordnet sind.

11. Batterie gemäß Anspruch 10,
**dadurch gekennzeichnet, dass**
das Kühlelement zwischen dem Zellenblock und dem Batteriegehäuse (11) angeordnet ist, wobei zwischen dem Kühlelement und dem Batteriegehäuse (11) ein Druckbeutel vorgesehen ist, der einen ausgehärteten Kunststoff aufweist und das Batteriegehäuse (11) zumindest abschnittsweise auswölbt derart, dass das Batteriegehäuse (11) über den Druckbeutel eine nach innen gerichtete Spannkraft auf das Kühlelement und den Zellenblock ausübt.

12. Kraftfahrzeug, insbesondere Hybridfahrzeug, mit wenigstens einem Batteriegehäuse (11) und/oder wenigstens einer Batterie gemäß einem der vorhergehenden Ansprüche.

13. Verfahren zur Herstellung eines Batteriegehäuses (11) oder einer Batterie oder eines Kraftfahrzeugs nach einem der vorhergehenden Ansprüche, mit den folgenden Schritten:
- Umkanten eines Stahlblechs zur Bildung eines C-Profils;
- Verschweißen der Längskanten zweier C-Profile zur Bildung eines Hauptkörpers (12) mit einem Vierkanthohlprofil;
- Anordnen zweier Abschlussdeckel an den Stirnseiten des Hauptkörpers (12), wobei die Abschlussdeckel (19, 20) innerhalb des Vierkanthohlprofil angeordnet werden;
- Schweißverbinden der Abschlussdeckel (19, 20) mit dem Hauptkörper (12).

## Claims

1. A battery housing (11), particularly for an energy storage system for a hybrid drive, having a tubular main body (12) and at least two end covers (19, 20) which are inserted in the main body (12), each having a closure plate (19.1, 20.1) which is arranged so as to be offset inwardly in the longitudinal direction of the main body (12),
wherein the closure plate (19.1, 20.1) supports housing walls of the main body (12)
**characterized in that**
the end covers (19, 20) are each welded to the main body (12) in fluid-tight manner and all joints of the battery housing (11) are formed without separate connecting elements.

2. The battery housing (11) according to claim 1,
**characterized in that**
the main body (12) and the end covers (19, 20) are each made from a material, particularly a steel or steel alloy, which has identical material properties.

3. The battery housing (11) according to claim 1 or 2,
**characterized by**
not more than four, particularly not more than three, continuous, fluid-tight weld seams.

4. The battery housing (11) according to any one of the preceding claims,
**characterized in that**
the main body (12) is formed from two metal sheets, each of which is folded into a C-profile, the lengthwise edges of which are joined by welding in such manner that a substantially rectangular tube shape is created.

5. The battery housing (11) according to any one of the preceding claims,
**characterized in that**
the closure plate (19.1, 20.1) extends substantially perpendicularly to a longitudinal axis of the main body (12) and has openings to allow electrical connectors and/or fluid connectors (26) to pass through.

6. The battery housing (11) according to any one of the preceding claims,
**characterized in that**
the end covers (19, 20) each have a surrounding peripheral flange (21) which is constructed as a single part with the closure plate (19.1, 20.1), extends outwardly in the longitudinal direction of the main body (12) and is welded to the main body (12).

7. The battery housing (11) according to claim 6,
**characterized in that**
the peripheral flange (21) has an outer edge which lies flush against an end edge on the frontal face of the main body (12).

8. The battery housing (11) according to any one of the preceding claims,
**characterized in that**
at least one mounting flange (27) is welded onto the main body (12) and is suited to attach the main body (12) to a vehicle.

9. The battery housing (11) according to any one of the preceding claims,
**characterized in that**
the main body (12) and the end covers (19, 20) each have a wall thickness between 2 mm and 5 mm, particularly between 2.5 mm and 4 mm, more particularly between 2.8 mm and 3.5 mm, most particularly 3 mm.

10. The battery, particularly for a hybrid drive, having at least one battery housing according to any one of the preceding claims, at least one cooling element and at least one cell block of battery cells (17) which are designed as round cells, wherein the cooling element and the cell block are arranged inside the battery housing (11).

11. The battery according to claim 10,
**characterized in that**
the cooling element is arranged between the cell block and the battery housing (11), wherein a pressure pouch is provided between the cooling element and the battery housing (11) and is made from hardened plastic, and at least regions of the battery housing (11) bulge outwards in such manner that the battery housing (11) exerts an inwardly acting tensioning force on the cooling element and the cell block through the pressure pouch.

12. A vehicle, particularly a hybrid vehicle having at least one battery housing (11) and/or at least one battery according to any one of the preceding claims.

13. A method for producing a battery housing (11) or battery or motor vehicle according to one of the preceding claims, having the following steps:
- folding a steel sheet to form a C-profile;
- welding the longitudinal edges of two C-profiles to form a main body (12) with a hollow rectangular profile;
- arranging two end covers on the frontal faces of the main body (12), wherein the end covers (19, 20) are arranged inside the hollow rectangular profile;
- attaching the end covers (19, 20) to the main body (12) by welding.

## Revendications

1. Boîtier de batterie (11), destiné en particulier à un accumulateur d'énergie à moteur hybride, pourvu d'un corps principal (12) de forme tubulaire et d'au moins deux couvercles de terminaison (19, 20) qui sont insérés dans le corps principal (12) et qui comportent chacun une plaque de fermeture (19.1, 20.1) qui en direction longitudinale du corps principal (12) est placée avec un décalage vers l'intérieur,
la plaque de fermeture (19.1, 20.1) soutenant des parois de boîtier du corps principal (12),
**caractérisé en ce que**
le couvercle de terminaison (19, 20) est respectivement soudé de manière étanche au fluide sur le corps principal (12) et **en ce que** toutes les zones de jointure du boîtier de batteries (11) sont conçues sans éléments d'assemblage séparés.

2. Boîtier de batterie (11) selon la revendication 1,
**caractérisé en ce que**
le corps principal (12) et le couvercle de terminaison (19, 20) sont conçus chacun en une matière, en particulier en un acier ou un alliage d'acier qui fait preuve de propriétés de matière identiques.

3. Boîtier de batterie (11) selon la revendication 1 ou 2,
**caractérisé par**
au plus quatre, en particulier par au plus trois joints de soudure, continus, étanches au fluide.

4. Boîtier de batterie (11) selon l'une quelconque des revendications précédentes,
**caractérisé en ce que**
le corps principal (12) est façonné à partir de deux tôles repliées chacune en un profilé en forme de C, qui sur leurs bords longitudinaux sont assemblées par soudure, de sorte qu'il soit créé un profilé tubulaire sensiblement rectangulaire.

5. Boîtier de batterie (11) selon l'une quelconque des revendications précédentes,
**caractérisé en ce que**
la plaque de fermeture (19.1, 20.1) s'étend sensiblement à la perpendiculaire d'un axe longitudinal du corps principal (12) et comporte des orifices pour le passage de raccordements électriques et/ou de raccordements fluidiques (26).

6. Boîtier de batterie (11) selon l'une quelconque des revendications précédentes,
**caractérisé en ce que**
les couvercles de terminaison (19, 20) comportent chacun une bride de bordure (21) périphérique, qui est conçue en monobloc avec la plaque de fermeture (19.1, 20.1), s'étend vers l'extérieur, dans la direction longitudinale du corps principal (12) et est soudée avec le corps principal (12).

7. Boîtier de batterie (11) selon la revendication 6,
**caractérisé en ce que**
la bride de bordure (21) comporte une arête extérieure qui se termine à fleur d'une arête de terminaison du corps principal (12).

8. Boîtier de batterie (11) selon l'une quelconque des revendications précédentes,
**caractérisé en ce que**
sur le corps principal (12) est soudée au moins une bride de fixation (27) qui est apte à la fixation du corps principal (12) sur un véhicule.

9. Boîtier de batterie (11) selon l'une quelconque des revendications précédentes,
**caractérisé en ce que**
le corps principal (12) et le couvercle de terminaison (19, 20) présentent chacun une épaisseur de paroi comprise entre 2 mm et 5 mm, en particulier entre 2,5 mm et 4 mm, en particulier entre 2,8 mm et 3,5 mm, en particulier de 3 mm.

10. Batterie, destinée en particulier à un moteur hybride, pourvue d'au moins un boîtier de batterie selon l'une quelconque des revendications précédentes, d'au moins un élément de refroidissement et d'au moins un bloc de cellule constitué de cellules de batterie (17), qui sont conçues sous la forme de cellules rondes, l'élément de refroidissement et le bloc de cellules étant placés à l'intérieur du boîtier de batterie (11) .

11. Batterie selon la revendication 10,
**caractérisé en ce que**
l'élément de refroidissement est placé entre le bloc de cellules et le boîtier de batterie (11), entre l'élément de refroidissement et le boîtier de batterie (11) étant prévue une poche de pression qui comporte une matière plastique solidifiée et **en ce que** le boîtier de batterie (11) est bombé au moins par segments, de sorte que le boîtier de batterie (11) exerce sur l'élément de refroidissement et le bloc de cellules, par l'intermédiaire de la poche de pression une force de serrage dirigée vers l'intérieur.

12. Véhicule automobile, en particulier véhicule hybride, pourvu d'au moins un boîtier de batterie (11) et/ou d'au moins une batterie selon l'une quelconque des revendications précédentes.

13. Procédé, destiné à la fabrication d'un boîtier de batterie (11) ou d'une batterie ou d'un véhicule automobile selon l'une quelconque des revendications précédentes, comportant les étapes suivantes, consistant à :
- replier une tôle d'acier pour créer un profilé en forme de C ;
- souder les arêtes longitudinales de deux profilés en forme de C pour créer un corps principal (12) présentant un profil creux carré ;
- placer deux couvercles de terminaison sur les faces frontales du corps principal (12), les couvercles de terminaison (19, 20) étant placés à l'intérieur du profil creux carré ;
- assembler par soudage le couvercle de terminaison (19, 20) avec le corps principal (12).
